(19) **Europäisches Patentamt**

**European Patent Office**

**Office européen des brevets**

(11) **EP 1 681 086 A1**

(12) **DEMANDE DE BREVET EUROPEEN**

(43) Date de publication:
**19.07.2006 Bulletin 2006/29**

(51) Int Cl.:
***B01D 46/52*** *(2006.01)* ***B60H 3/06*** *(2006.01)*

(21) Numéro de dépôt: **05111250.6**

(22) Date de dépôt: **24.11.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **30.12.2004 FR 0453258**

(71) Demandeur: **Valeo Matériaux de Friction**
**87020 Limoges (FR)**

(72) Inventeurs:
• **Klossek, Robert**
**14700, Falaise (FR)**

• **Lebreton, Sébastien**
**61100, Flers (FR)**
• **Bisson, Laurent**
**14110, Conde sur Noireau (FR)**
• **Silva, Manuel**
**14680, Gouvix (FR)**

(74) Mandataire: **Vignesoult, Serge L. M.**
**Valeo Embrayages**
**Propriété Industrielle**
**15, rue des Rosiers**
**93585 Saint-Ouen Cedex (FR)**

(54) **Dispositif de filtration d'air à paroi de canalisation souple, notamment pour véhicule automobile.**

(57) Ce dispositif de filtration d'air (10) comporte un média filtrant (12) relié à un support (14). Le support (14) comprend au moins une paroi plane (16) de canalisation d'air ayant une épaisseur $e_1$, une masse volumique $Mv_1$ et un produit de rigidité $P_1 = e_1 \times Mv_1$ vérifiant la relation de souplesse $P_1 \leq 0.3 kg/m^2$. La paroi de canalisation souple (16) est reliée à un élément de rigidification (18) ayant une dimension perpendiculaire à la paroi de canalisation souple appelée épaisseur $e_2$, une masse volumique $Mv_2$ et un produit de rigidité $P_2 = e_2 \times Mv_2$ vérifiant la relation de rigidité $P_2 \geq 0.5 kg/m^2$. L'élément de rigidification (18) est relié à la paroi de canalisation souple (16) par une soudure thermique sans apport de matière.

**Fig. 1**

EP 1 681 086 A1

**Description**

La présente invention concerne un dispositif de filtration d'air à paroi de canalisation souple, notamment pour véhicule automobile.

Elle s'applique en particulier à la filtration d'air circulant dans un véhicule automobile, notamment d'air climatisé ou non destiné à circuler dans l'habitacle du véhicule.

Dans ce qui suit, en considérant qu'un élément a une épaisseur e et une masse volumique *Mv,* on qualifiera de "souple" un élément dont le produit de rigidité P vérifie la relation suivante, dite relation de souplesse :

$$P = e \times Mv \leq 0.3 kg / m^2 \, ,$$

et de "rigide" un élément dont le produit de rigidité P vérifie la relation suivante, dite relation de rigidité :

$$P = e \times Mv \geq 0.5 kg / m^2 \, .$$

On connaît déjà, dans l'état de la technique, un dispositif de filtration d'air, du type comportant un média filtrant relié à un support comprenant au moins une paroi plane de canalisation d'air ayant une épaisseur $e_1$, une masse volumique $Mv_1$ et un produit de rigidité $P_1 = e_1 \times Mv_1$ vérifiant la relation suivante, dite relation de souplesse :

$$P_1 \leq 0.3 kg / m^2 \; ;$$

la paroi de canalisation souple étant reliée à un élément de rigidification ayant une dimension perpendiculaire à la paroi de canalisation souple appelée épaisseur $e_2$, une masse volumique $Mv_2$ et un produit de rigidité $P_2 = e_2 \times Mv_2$ vérifiant la relation suivante, dite relation de rigidité :

$$P_2 \geq 0.5 kg / m^2 \, .$$

Généralement, il est plus facile de relier au média filtrant une paroi souple qu'une paroi rigide.

En effet, il est connu de relier le média filtrant à une paroi de canalisation souple ou rigide par soudage thermique d'une surface de jonction du média filtrant sur une face interne de la paroi de canalisation. Cette opération de soudage se fait sans apport de matière.

Toutefois, lors du soudage, les parois de canalisation rigides tendent à se déformer sous l'effet de la chaleur. Cet inconvénient est évité lorsque les parois de canalisation sont souples.

Cependant, une paroi de canalisation souple n'est pas apte à rigidifier le dispositif de filtration. C'est pourquoi on fixe de préférence un élément de rigidification sur la paroi souple de canalisation, généralement par collage, habituellement au moyen d'une colle thermofusible, par exemple une polyoléfine.

Au cours de cette opération de collage, qui se fait donc avec apport de matière, tout d'abord, on applique la colle fondue sur une face externe de la paroi de canalisation et sur une surface de jonction complémentaire de l'élément de rigidification, puis, on presse l'une contre l'autre la face externe et la surface de jonction complémentaire.

Or, la colle thermofusible n'est généralement pas recyclable. Son utilisation limite donc les possibilités de recyclage du dispositif de filtration. De plus, la colle présente dans certains cas une tenue à la chaleur insatisfaisante, ce qui peut limiter la fiabilité de la liaison entre l'élément de rigidification et la paroi souple de canalisation.

L'invention a notamment pour but de s'affranchir des problèmes liés à l'utilisation de cette colle.

A cet effet, l'invention a pour objet un dispositif de filtration d'air du type précité, où l'élément de rigidification est relié à la paroi de canalisation souple par une soudure thermique sans apport de matière.

L'élément de rigidification étant relié à la paroi de canalisation d'air par une soudure thermique plutôt que par de la colle, on facilite le recyclage du dispositif de filtration d'air. Par ailleurs, la soudure thermique permet généralement une meilleure cohésion de l'élément de rigidification avec la paroi de canalisation et une meilleure tenue à la chaleur que la colle. En particulier, la soudure thermique ne se dégrade pas aux températures élevées susceptibles d'être atteintes par un véhicule automobile en saison chaude.

De plus, on a pu observer que la soudure thermique de l'élément de rigidification sur la paroi de canalisation souple ne provoque pas de déformation gênante de l'élément de rigidification.

Un dispositif de filtration d'air selon l'invention peut en outre comporter l'une ou plusieurs des caractéristiques suivantes :

- le produit de rigidité $P_1$ de la paroi de canalisation est inférieur ou égal à 0,2kg/m² et/ou supérieur ou égal à 0,05kg/m² ;
- le produit de rigidité P₂ de l'élément de rigidification est supérieur ou égal *à* 1*kg/m²,* voire supérieur ou égal à 2*kg/m² ;*
- en appelant hauteur d'un élément la dimension de cet élément parallèle à la direction d'un flux d'air destiné à traverser le média filtrant, la hauteur minimale de la paroi de canalisation souple est supérieure à la hauteur maximale de l'élément de rigidification ;
- l'épaisseur $e_2$ de l'élément de rigidification est supérieure à l'épaisseur $e_1$ de la paroi de canalisation souple ;

- l'élément de rigidification est relié à une face externe de la paroi de canalisation souple et le média filtrant est relié à une face interne de cette paroi de canalisation ;
- l'élément de rigidification forme un élément de glissière destiné à coopérer avec une un élément de glissière complémentaire d'un boîtier dans lequel le dispositif de filtration est destiné à être logé ;
- l'élément de rigidification a une section transversale sensiblement rectangulaire ;
- l'élément de rigidification a une section transversale sensiblement triangulaire ;
- l'élément de rigidification a une section transversale étagée ;
- l'élément de rigidification et le média filtrant sont reliés à une face interne de la paroi de canalisation souple ;
- le média filtrant est relié à la paroi de canalisation souple par une soudure thermique sans apport de matière ;
- le média filtrant est plié en accordéon, la paroi de canalisation étant dite transversale et s'étendant parallèlement aux plis du média filtrant;
- le média filtrant est plié en accordéon, la paroi de canalisation étant dite longitudinale et s'étendant perpendiculairement aux plis du média filtrant ;
- le support comprend des première et seconde parois de canalisation longitudinales souples sensiblement parallèles, entre lesquelles s'étend le média filtrant, et des premier et second éléments de rigidification vérifiant la relation de rigidité, s'étendant parallèlement aux première et seconde parois de canalisation et reliés respectivement à ces première et seconde parois de canalisation par une soudure thermique sans apport de matière ; et
- le média filtrant, la paroi de canalisation et l'élément de rigidification sont tous fabriqués en polymère thermoplastique, de préférence en un même polymère thermoplastique.
- le polymère thermoplastique est choisi parmi un polypropylène, un polyéthylène, un polyamide, un polyester et un polycarbonate.
- tous les composants sont fabriqués en un même polymère thermoplastique.

L'invention sera mieux comprise à la lecture de la description qui va suivre, donnée uniquement à titre d'exemple et faite en se référant aux dessins annexés dans lesquels :

- la figure 1 est une vue en perspective d'un dispositif de filtration selon un premier mode de réalisation de l'invention ;
- les figures 2 et 3 sont des demi-vues en coupe transversale d'un dispositif de filtration selon des deuxième et troisième modes de réalisation de l'invention respectivement ;
- les figures 4 et 5 sont des demi-vues en coupe longitudinale d'un dispositif de filtration selon des quatrième et cinquième modes de réalisation de l'invention respectivement.

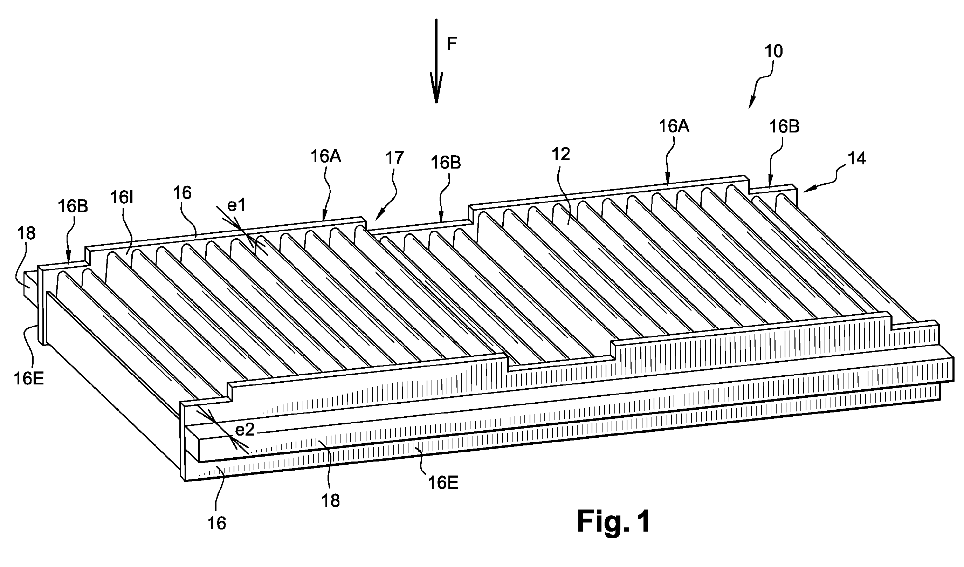

On a représenté sur la figure 1 un dispositif de filtration d'air selon un premier mode de réalisation de l'invention, désigné par la référence générale 10.

Le dispositif de filtration 10 est destiné par exemple à être agencé dans une installation de circulation d'air dans un véhicule automobile, afin notamment d'approvisionner un habitacle de ce véhicule en air climatisé ou non. A cet effet, le dispositif de filtration 10 est habituellement logé dans un boîtier (non représenté) agencé dans le corps du véhicule automobile.

Le dispositif de filtration 10 comporte un média filtrant 12 de type classique, plié en accordéon et relié à un support 14. La direction et le sens d'écoulement de l'air à travers ce média filtrant 12 sont représentés par une flèche F sur la figure 1.

Le média filtrant 12 est constitué par exemple d'un matériau multicouche porté, le cas échéant, par des grilles non représentées, et comporte avantageusement des moyens de filtration de particules et/ou de gaz.

Afin de faciliter le recyclage du dispositif 10, le média filtrant 12 est de préférence entièrement fabriqué en matériau synthétique thermoplastique, plus particulièrement, dans l'exemple décrit, en polypropylène.

Le support 14 comporte deux parois planes 16 de canalisation d'air sensiblement parallèles, entre lesquelles le média filtrant 12 s'étend. Les parois 16 sont destinées à canaliser l'air à travers le média filtrant 12.

Dans le premier mode de réalisation de l'invention, les parois 16 sont dites longitudinales et s'étendent sensiblement perpendiculairement aux plis du média filtrant 12. Elles sont munies chacune d'une face interne 161 reliée à une surface de jonction complémentaire du média filtrant 12, par une soudure thermique sans apport de matière.

La soudure thermique est réalisée par une opération classique de soudage miroir, par rayonnement infra-rouge, ou par ultra-sons.

Dans ce qui suit, on appellera épaisseur d'un élément sa dimension moyenne perpendiculaire à la direction générale F d'écoulement d'air. Par ailleurs, on appellera hauteur d'un élément sa dimension parallèle à la direction générale F d'écoulement d'air.

Les parois de canalisation 16 sont relativement souples de façon que le produit $P_1 = e_1 \times Mv_1$, dit de produit de rigidité, vérifie la relation suivante, dite relation de souplesse :

$$P_1 \leq 0.3\,kg/m^2\;;$$

$e_1$ étant l'épaisseur de la paroi de canalisation 16 mesurée perpendiculairement à sa face interne 16I, et

$Mv_1$ étant la masse volumique de la paroi de canalisation 16.

De préférence, le produit de rigidité $P_1$ de la paroi de canalisation est inférieur ou égal à $0.2 kg/m^2$. Les parois de canalisation longitudinales 16 sont généralement fabriquées dans un matériau synthétique thermoplastique, de préférence en polypropylène.

Des parois de canalisation ont été réalisées en polypropylène, ayant les caractéristiques suivantes :

Ex 1 : $e_1 = 2\ mm$, $Mv_1 = 30 kg/m^3$, $P_1 = 0,06 kg/m^2$
EX 2 : $e_1 = 2\ mm$, $Mv_1 = 100 kg/m^3$, $P_1 = 0,2 kg/m^2$
Ex 3 : $e_1 = 3\ mm$, $Mv_1 = 60 kg/m^3$, $P_1 = 0,18 kg/m^2$
Ex 4 : $e_1 = 5\ mm$, $Mv_1 = 40 kg/m^3$, $P_1 = 0,2 kg/m^2$

Dans l'exemple représenté, le dispositif de filtration 10 est muni de moyens 17 formant détrompeur destinés à coopérer avec des moyens complémentaires ménagés sur le boîtier dans lequel est logé le dispositif 10.

Les moyens 17 formant détrompeur sont agencés sur les parois de canalisation 16. A cet effet, les parois de canalisation 16 comportent des parties de hauteur différentes, à savoir deux parties hautes 16A et trois parties basses 16B.

On notera que la hauteur des plis du média filtrant 12 est variable, ce média filtrant 12 comportant des plis de faible hauteur correspondant sensiblement à la hauteur des parties basses 16B et des plis de grande hauteur correspondant sensiblement à la hauteur des parties hautes 16A.

Les parois de canalisation longidudinales souples 16 sont généralement faciles à relier au média filtrant 12. Cependant, ces parois de canalisation souples 16 ne rigidifient pas de manière suffisante le dispositif de filtration 10.

Afin de rigidifier le dispositif de filtration 10, un élément de rigidification 18 est fixé sur chaque paroi de canalisation 16. A cet effet, chaque paroi de canalisation 16 est munie d'une face externe 16E reliée sans apport de matière à l'élément de rigidification 18 correspondant, par une soudure thermique.

La soudure thermique est réalisée par une opération classique de soudage miroir, par rayonnement infra-rouge, ou par ultra-sons.

On notera que la paroi de canalisation 16 et l'élément de rigidification 18 peuvent être reliés ensemble avant le soudage du média filtrant 12 sur la paroi de canalisation 16.

Les éléments de rigidification 18 sont choisis de façon que le produit de rigidité $P_2 = e_2 \times Mv_2$ vérifie la relation de rigidité :

$$P_2 \geq 0.5 kg/m^2 \, ,$$

$e_2$ étant l'épaisseur d'un élément de rigidification 18 correspondant à la dimension de cet élément 18 perpendiculaire à la paroi de canalisation 16 qui le porte, et

$Mv_2$ étant la masse volumique de l'élément de rigidification 18.

De préférence, le produit de rigidité $P_2$ de l'élément de rigidification est supérieur à $1 kg/m^2$, voire supérieur à $2 kg/m^2$.

Les éléments de rigidification 18 sont fabriqués dans un matériau synthétique thermoplastique, de préférence en polypropylène.

Des éléments de rigidification ont été réalisés en polypropylène, ayant les caractéristiques suivantes :

Ex 5 : $e_2 = 2,5 mm$, $Mv_2 = 910 kg/m^3$, $P_2 = 2,3 kg/m^2$
Ex 6 : $e_2 = 5 mm$, $Mv_2 = 140 kg/m^3$, $P_2 = 0,7 kg/m^2$
Ex 7 : $e_2 = 1,5 mm$, $Mv_2 = 910 kg/m^3$, $P_2 = 1,4 kg/m^2$

Des dispositifs de filtration ont été réalisés en associant les parois de canalisation selon les exemples Ex 1 à Ex 4 aux éléments de rigidification selon les exemples Ex 5 à Ex 7.

Ainsi, le dispositif de filtration 10 est avantageusement fabriqué entièrement en polypropylène et donc facilement recyclable.

Dans le premier mode de réalisation décrit en référence à la figure 1, les éléments de rigidification 18 ont chacun une section transversale sensiblement rectangulaire.

Chaque élément de rigidification 18 a une hauteur inférieure à la hauteur minimale de la paroi longitudinale 16 correspondante. De manière plus générale, la hauteur maximale de chaque élément de rigidification 18 est inférieure à la hauteur minimale de la paroi de canalisation d'air 16 correspondante.

Par ailleurs, l'épaisseur $e_2$ de chaque élément de rigidification 18 est généralement supérieure à l'épaisseur $e_1$ de la paroi de canalisation d'air 16 correspondante.

En plus de leur fonction de rigidification, les éléments de rigidification 18 forment généralement des éléments de glissière destinés à coopérer avec des éléments de glissière complémentaires (non représentés) du boîtier dans lequel le dispositif de filtration 10 est logé. Ainsi, les éléments de rigidification 18 permettent le guidage du dispositif de filtration 10 lors de son insertion dans le boîtier.

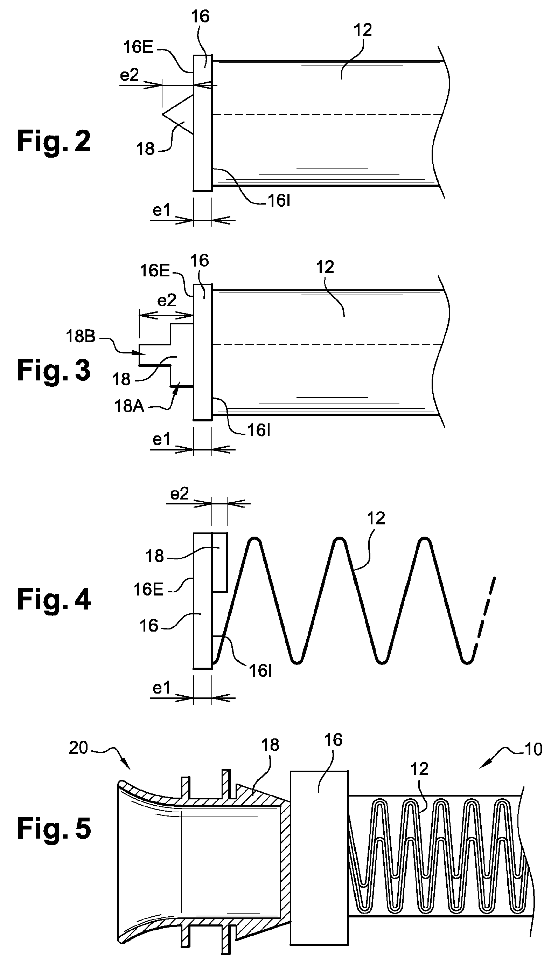

Sur les figures 2 à 5, les éléments analogues à ceux de la figure 1 sont désignés par des références identiques.

Dans le deuxième mode de réalisation, décrit en référence à la figure 2, chaque élément de rigidification 18 forme un élément de glissière profilé pour optimiser le guidage du dispositif de filtration 10 lors de son insertion dans le boîtier. A cet effet, chaque élément de rigidification 18 a une section transversale sensiblement triangulaire.

Dans le troisième mode de réalisation, décrit en référence à la figure 3, chaque élément de rigidification 18 forme un élément de glissière de section transversale étagée. Cette section étagée présente une partie de grande hauteur 18A soudée thermiquement à la face externe 16E de la paroi de canalisation 16, et une partie 18B de faible hauteur particulièrement bien adaptée au guidage dans le boîtier de logement du dispositif 10.

Dans les quatrième et cinquième modes de réalisation, les parois de canalisation 16 sont dites transversales et s'étendent parallèlement aux plis du média filtrant 12.

Dans le quatrième mode de réalisation, décrit en référence à la figure 4, l'élément de rigidification 18 est, comme le média filtrant 12, relié à la face interne 16I de la paroi de canalisation 16. L'élément de rigidification 18 peut également avoir la forme d'un U ou d'un L. Il peut être avantageux de le disposer de manière à ce qu'il couvre le sommet du premier pli du média filtrant en contact avec la paroi 16, et dans le cas d'un U qu'il chevauche ledit sommet du premier pli du média filtrant.

Dans le cinquième mode de réalisation, décrit en référence à la figure 5, l'élément de rigidification 18 porte des moyens 20 d'accrochage du dispositif de filtration 10 sur le boîtier dans lequel est logé ce dispositif 10. Les moyens d'accrochage 20 sont généralement venus de matière avec l'élément de rigidification 18.

Le dispositif de filtration 10 selon le cinquième mode de réalisation de l'invention peut également comporter une paroi longitudinale 16 telle que décrite dans l'un des trois premiers modes de réalisation.

On notera que l'invention n'est pas limitée aux modes de réalisation précédemment décrits. En effet, le dispositif de filtration 10 pourrait également comporter des éléments d'étanchéité soudés thermiquement sur des faces externes des éléments de rigidification 18. D'une manière plus générale, le dispositif de filtration 10 pourrait comporter autant d'éléments fonctionnels que nécessaire, empilés sur la paroi de canalisation 16 et soudés thermiquement les uns aux autres. Dans ce cas, chaque élément fonctionnel apporte une fonction spécifique au dispositif de filtration 10 (support du média filtrant 12, rigidification du dispositif 10, étanchéité, facilitation du montage dans le boîtier, etc.).

Par ailleurs, le dispositif de filtration 10 pourrait être fabriqué avec n'importe quel matériau habituel. Par exemple, le média filtrant 12 pourrait comporter du charbon actif en grain plutôt que d'être entièrement fabriqué en polypropylène.

## Revendications

1. Dispositif de filtration d'air (10), du type comportant un média filtrant (12) relié à un support (14) comprenant au moins une paroi plane (16) de canalisation d'air ayant une épaisseur $e_1$, une masse volumique $Mv_1$ et un produit de rigidité $P_1 = e_1 \times Mv_1$ vérifiant la relation suivante, dite relation de souplesse :

$$P_1 \leq 0.3 kg/m^2 \; ;$$

la paroi de canalisation souple (16) étant reliée à un élément de rigidification (18) ayant une dimension perpendiculaire à la paroi de canalisation souple appelée épaisseur $e_2$, une masse volumique $Mv_2$ et un produit de rigidité $P_2 = e_2 \times Mv_2$ vérifiant la relation suivante, dite relation de rigidité :

$$P_2 \geq 0.5 kg/m^2 \; ;$$

**caractérisé en ce que** l'élément de rigidification (18) est relié à la paroi de canalisation souple (16) par une soudure thermique sans apport de matière.

2. Dispositif (10) de filtration d'air selon la revendication 1, **caractérisé en ce que** le produit de rigidité $P_1$ de la paroi de canalisation (16) est inférieur ou égal à $0.2 kg/m^2$ et/ou supérieur ou égal à $0,05 kg/m^2$, et/ou le produit de rigidité $P_2$ de l'élément de rigidification (18) est supérieur ou égal à $1 kg/m^2$, voire supérieur ou égal à $2 kg/m^2$.

3. Dispositif (10) de filtration d'air selon la revendication 1 ou 2, **caractérisé en ce que**, en appelant hauteur d'un élément la dimension de cet élément parallèle à la direction d'un flux d'air (F) destiné à traverser le média filtrant (12), la hauteur minimale de la paroi de canalisation souple (16) est supérieure à la hauteur maximale de l'élément de rigidification (18).

4. Dispositif (10) de filtration d'air selon l'une quelconque des revendications 1 à 3, **caractérisé en ce que** l'épaisseur $e_2$ de l'élément de rigidification (18) est supérieure à l'épaisseur $e_1$ de la paroi de canalisation souple (16).

5. Dispositif (10) de filtration d'air selon l'une quelconque des revendications 1 à 4, **caractérisé en ce que** l'élément de rigidification (18) est relié à une face externe (16E) de la paroi de canalisation souple (16) et le média filtrant (12) est relié à une face interne (16I) de cette paroi de canalisation (16).

6. Dispositif (10) de filtration d'air selon la revendication 5, **caractérisé en ce que** l'élément de rigidification (18) forme un élément de glissière destiné à coopérer avec un élément de glissière complémentaire d'un boîtier dans lequel le dispositif de filtration (10) est destiné à être logé.

**7.** Dispositif (10) de filtration d'air selon la revendication 6, **caractérisé en ce que** l'élément de rigidification (18) a une section transversale sensiblement rectangulaire.

**8.** Dispositif (10) de filtration d'air selon la revendication 6, **caractérisé en ce que** l'élément de rigidification (18) a une section transversale sensiblement triangulaire.

**9.** Dispositif (10) de filtration d'air selon la revendication 6, **caractérisé en ce que** l'élément de rigidification (18) a une section transversale étagée.

**10.** Dispositif (10) de filtration d'air selon la revendication 5, **caractérisé en ce que** l'élément de rigidification (18) est muni de moyens (20) d'accrochage dans un boîtier dans lequel le dispositif de filtration (10) est destiné à être logé.

**11.** Dispositif (10) de filtration d'air selon l'une quelconque des revendications 1 à 4, **caractérisé en ce que** l'élément de rigidification (18) et le média filtrant (12) sont reliés à une face interne (16I) de la paroi de canalisation souple.

**12.** Dispositif (10) de filtration d'air selon l'une quelconque des revendications précédentes, **caractérisé en ce que** le média filtrant (12) est relié à la paroi de canalisation souple (16) par une soudure thermique sans apport de matière.

**13.** Dispositif (10) de filtration d'air selon l'une quelconque des revendications 1 à 12, **caractérisé en ce que** le support (14) comprend des première et seconde parois (16) de canalisation souples sensiblement parallèles, entre lesquelles s'étend le média filtrant (12), et des premier et second éléments de rigidification (18) vérifiant la relation de rigidité, s'étendant parallèlement aux première et seconde parois de canalisation (16) et reliés respectivement à ces première et seconde parois de canalisation (16) par une soudure thermique sans apport de matière.

**14.** Dispositif (10) de filtration d'air selon l'une quelconque des revendications précédentes, **caractérisé en ce que** le média filtrant (12), la paroi de canalisation (16) et l'élément de rigidification (18) sont tous fabriqués en polymère thermoplastique, de préférence en un même polymère thermoplastique.

**15.** Dispositif de filtration d'air (10) selon la revendication 14, **caractérisé en ce que** le polymère thermoplastique est choisi parmi un polypropylène, un polyéthylène, un polyamide, un polyester et un polycarbonate.

**16.** Dispositif de filtration d'air (10) selon la revendication 15, **caractérisé en ce que** tous ses composants sont fabriqués en un même polymère thermoplastique.

**Fig. 1**

EP 1 681 086 A1

Fig. 2

Fig. 3

Fig. 4

Fig. 5

**Office européen des brevets**

**RAPPORT DE RECHERCHE EUROPEENNE**

Numéro de la demande

EP 05 11 1250

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | WO 2004/087298 A (VALEO MATERIAUX DE FRICTION; BAZIRET, GERARD; BIDOT, JOHANN; BISSON, L) 14 octobre 2004 (2004-10-14) * le document en entier * ----- | 1-16 | B01D46/52 B60H3/06 |
| Y | EP 1 129 760 A (TOYO BOSEKI KABUSHIKI KAISHA) 5 septembre 2001 (2001-09-05) * abrégé * * alinéas [0018], [0019] * ----- | 1-16 | |
| A | EP 0 721 792 A (TECNOCAR S.R.L) 17 juillet 1996 (1996-07-17) * abrégé * * colonne 4, ligne 27-31 * ----- | 1-16 | |

| DOMAINES TECHNIQUES RECHERCHES (IPC) |
|---|
| B01D B60H |

Le présent rapport a été établi pour toutes les revendications

| Lieu de la recherche | Date d'achèvement de la recherche | Examinateur |
|---|---|---|
| Munich | 13 février 2006 | Hoffmann, A |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

 

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 11 1250

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-02-2006

| Document brevet cité au rapport de recherche | | Date de publication | Membre(s) de la famille de brevet(s) | | Date de publication |
|---|---|---|---|---|---|
| WO 2004087298 | A | 14-10-2004 | EP | 1606035 A2 | 21-12-2005 |
| EP 1129760 | A | 05-09-2001 | JP | 2001239121 A | 04-09-2001 |
| | | | US | 2001032545 A1 | 25-10-2001 |
| EP 0721792 | A | 17-07-1996 | BR | 9505733 A | 23-12-1997 |
| | | | IT | T0950022 A1 | 16-07-1996 |
| | | | JP | 8258561 A | 08-10-1996 |

EPO FORM P0460

Pour tout renseignement concernant cette annexe : voir Journal Officiel de l'Office européen des brevets, No.12/82